# EUROPEAN PATENT SPECIFICATION

(11) **EP 3 861 199 B1**
(45) Date of publication and mention of the grant of the patent: **07.12.2022**
(21) Application number: 19783421.1
(22) Date of filing: 01.10.2019
(51) Int. Cl.: F01M 1/08

(54) **DEFORMATION OF A VALVE SEAT FOR IMPROVING A LUBRICATOR PUMP UNIT AND LUBRICATION SYSTEM OF A LARGE SLOW-RUNNING TWO-STROKE ENGINE**
DEFORMATION EINES VENTILSITZES ZUR VERBESSERUNG EINER SCHMIERÖLPUMPENEINHEIT UND SCHMIERSYSTEM EINES GROSSEN LANGSAM LAUFENDEN ZWEITAKTMOTORS
DÉFORMATION D'UN SIÈGE DE SOUPAPE POUR AMÉLIORER UNE UNITÉ DE POMPE DE LUBRIFICATION ET SYSTÈME DE LUBRIFICATION D'UN GROS MOTEUR À DEUX TEMPS À BAS RÉGIME

(30) Priority: 02.10.2018 DK PA201870647
(43) Date of publication of application: 11.08.2021
(73) Proprietor: Hans Jensen Lubricators A/S, 9560 Hadsund (DK)
(72) Inventor: BAK, Peer, 9300 Sæby (DK); FLODGAARD, Emil, 9632 Møldrup (DK)
(74) Representative: Patrade A/S
(86) International application number: PCT/DK2019/050288
(87) International publication number: WO 2020/069705

(56) References cited:
- EP-A1- 1 701 032
- WO-A1-2015/192808
- WO-A1-2016/015732
- DE-A1- 19 545 333
- DE-A1-102013 210 760
- DE-B4- 19 743 955
- DE-U1- 9 210 041
- GB-A- 2 021 683
- US-A- 3 589 386
- US-A- 3 894 556
- US-A1- 2013 260 647

## Description

### FIELD OF THE INVENTION

The present invention relates to a method for improving a lubricator pump unit for a lubrication system in a large slow-running two-stroke engine. An existing lubrication system is modified for longer lifetime without leakage. For example, the large slow-running two-stroke engine is a marine engine or a large engine in power plants.

More specific the present invention relates to a method of improving a lubrication system of a large slow running engine,
wherein the engine comprises a cylinder with a reciprocal piston inside and with a plurality of lubricant injectors distributed along a perimeter of the cylinder for injection of lubricant into the cylinder at various positions on the perimeter during injection phases;
wherein the lubrication system is configured for providing lubricant to the injectors in the injection phases; wherein the lubrication system comprises a lubricator for being pipe-connected to each injector by a lubricant feed conduit for providing pressurized lubricant to each injector though the lubricant feed conduit in the injection phases;
wherein the lubricator comprises a housing in which a hydraulic-driven actuator piston is arranged reciprocal along a stroke length,
wherein the housing further contains a plurality of injection plungers and a corresponding plurality of dosing channels as well as non-return valves, one for each dosing channel, each injection plunger being slidingly arranged in one of the dosing channels, wherein the injection plungers are coupled to the actuator piston in order to be moved in common by the actuator piston over the stroke length and as a consequence pressurize lubricant in the dosing channels over a dosing channel distance for expelling the pressurized lubricant from each dosing channels through the corresponding non-return valve for injection of the lubricant into the engine cylinder; wherein the dosing channel distance defines the volume of lubricant expelled from the dosing channel through the non-return valve during the injection phase;
wherein each non-return valve is provided in a corresponding valve-chamber in the housing and comprises a valve-member pre-stressed against a valve-seat by the load of a spring.

### BACKGROUND OF THE INVENTION

Due to the focus of on environmental protection, efforts are on-going with respect reduction of emissions from marine engines. This also involves the steady optimization of lubrication systems for such engines, especially due to increased competition. One of the economic aspects with increased attention is a reduction of oil consumption, not only because of environmental protection but also because this is a significant part of the operational costs of ships.

A lubrication system for marine engines is disclosed in German patent document DE19743955B4 and equivalent Danish patent DK173288B1. It discloses a lubrication system in which a central controller feeds lubricant to a lubricator for each cylinder of the marine engine. The lubricator distributes lubricant to a plurality of lubricant injectors distributed around the circumference of the cylinder. The lubricator comprises a housing in which a plurality of piston pumps are arranged around a circle and driven synchronous in common by a hydraulic driven actuator piston. Each of the piston pumps comprises an injection plunger that is pumping lubricant through a non-return valve to one of the injectors of a single cylinder. The hydraulic driven actuator piston is moving over an adjustable distance between its stationary rearward end stop and a forward end stop that is adjustable by an adjusting screw. For turning the adjusting screw, it is accessible at an end cap that covers a flange of the housing, through which the adjusting screw extends.

In connection with injection of compact jets of lubricant into marine engine cylinders and also for lubricant quills onto the piston between the piston rings, this system has gained widespread distribution and is marketed under the trade name Alpha Lubricator pump unit by the company MAN B&W Diesel and Turbo.

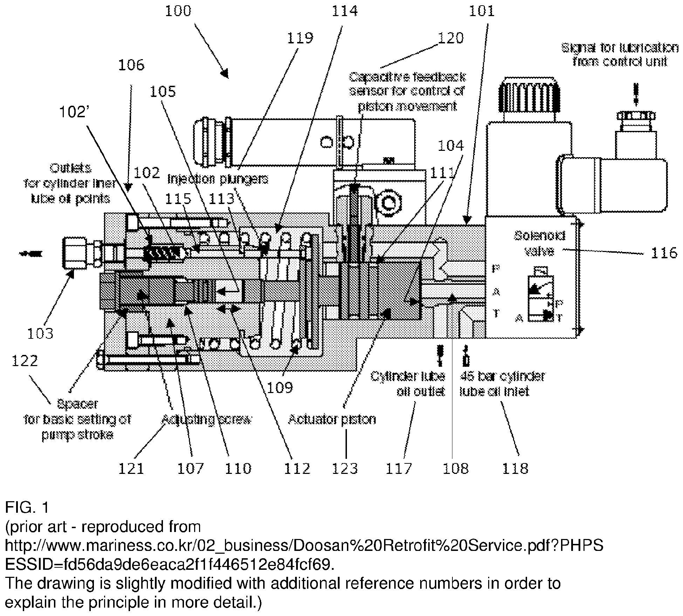

FIG. 1 illustrates an example of a lubricator pump unit for an Alpha lubrication system as it is found on the Internet page http://www.mariness.co.kr/02_business/Doosan%20Retrofit%20Service.pdf?PHPSESSID=fd56da9de6eaca2f1f446512e84fcf69.

The drawing is slightly modified with additional reference numbers in order to explain the principle in more detail. For simplicity, the lubricator pump unit for an Alpha lubrication system as marketed by MAN B&W Diesel and Turbo is called an "Alpha Lubricator" in the following. This term is in agreement with the normally used terminology in the technical field of marine engines and in agreement with related publications on the Internet and in technical literature.

Similar to the above mentioned DE19743955B4 and DK173288B1, the Alpha Lubricator 100 comprises a metal housing 101 in which a plurality of injection plungers 119 are arranged one a circle and driven synchronous in common by a hydraulic driven actuator piston 123. Each injection plunger 119 is arranged slidingly in a dosing channel 115 receiving lubricant from an internal volume 114 of the housing 101 through an inlet aperture 113. The inlet aperture 113 is closed by the injection plunger 119 during forward motion of the injection plunger 119 so that further forward motion by the injection plunger 119 pressurizes the received lubricant in the remaining part of the dosing channel 115 and pumps it through a non-return valve 102 into a pipe 103 and to one of the injectors of a single cylinder. During retraction of the actuator piston 123, caused by the pre-stressed spring 109, the injection plunger 119 is retracted, and vacuum created in the dosing channel 115, until the forward end of the injection plunger 119 is retracted past the inlet aperture 113 and lubricant can flow through the inlet aperture 113 and refill the dosing channel 115.

The volume of lubricant pressurized by the injection plunger 119 in the dosing channel 115 and expelled through the non-return valve 102 is defined by the travel distance of the injection plunger 119 from the inlet aperture 113 to the most forward position before retraction. During the movement of the actuator piston 123 over the stroke length, the first part of the movement of the injection plunger 119 past the inlet aperture 113, and only once the injection plunger 119 has moved past the inlet aperture 113 and closed it, the lubricant is pressurised and expelled from the remaining dosing channel distance.

The hydraulic driven actuator piston 123 is moving over an adjustable distance between its stationary rearward end stop 104 and a forward end stop 105 that is adjustable by an adjusting screw. For turning the adjusting screw 121, it is accessible at an end cap 106 that covers a flange 107 of the housing 101, through which the adjusting screw 121 extends. The flange 107 in the Alpha Lubricator 100 supports the spacer 122 and contains a threading 110 for adjustment of the adjusting screw 121. The reciprocal actuator piston 123 is driven by oscillating oil pressure in the volume 108 behind the actuator piston 123, where a solenoid valve 116 shifts between two pressure levels in this volume 108 behind the actuator piston 123. Once, the lower pressure level is reached, a spring 109 load presses the actuator piston 123 back to the rear end stop. The solenoid valve 116 is regulated by corresponding signals from a control unit.

As can be seen in FIG. 1, a spacer 122 for basic settings of the pump stroke is provided in the 107 flange behind the end cap 106, at which the head of the adjusting screw 121 is accessible for adjustment by rotation.

The Alpha Lubricator is different relatively the above mentioned patents DE19743955B4 and DK173288B1 in that a capacitive feedback sensor 120 is used to verify a sufficiently long stroke length of the hydraulic actuator.

This feedback sensor 120 is also illustrated in FIG 1. As shown, the hydraulic actuator piston comprises two circumferential grooves 111, and the feedback sensor 120 gives a confirmation signal of proper lubrication to the central controller if the stroke of the hydraulic actuator piston 123 is long enough for the second groove 111 to move pass the feedback sensor 120. When the first and second grooves 111 pass by the feedback sensor 120, the feedback sensor 120 creates a double-pulsed signal which the central controller takes as confirmation of proper lubrication. If only one the first groove 111 passes by the feedback sensor 120, the corresponding single-pulsed signal from the feedback sensor 120 indicates to the central controller general functioning of the feedback sensor 120 and movement of the actuator piston 123 over at least a small distance but not sufficient movement of the actuator piston 123 for proper lubrication. If the feedback sensor 120 is giving any signal, a warning message is provided by the controller that the stroke was not measured as long enough for proper lubrication.

The non-return valve 102 is provided inside a valve-chamber 102' and is build up traditionally by comprising a valve-member, in this case a spherical valve-member, pre-stressed against a valve-seat by a spring. The lubricant in the dosing channel 115 displaces the spherical valve-member against the pre-stressing force of the helical spring once the lubricant pressure rises above a predetermined limit where the force created by the pressurised lubricant is above the pre-stressed force. Once opened, the non-return valve 102 gives passage to the pipe 103 for lubricant flow to the injector as long as the pressure is at the increased state in the injection phase. When the oil pressure in the dosing channel 115 decreases below the predetermined limit, the non-return valve 102 closes again for the idle phase and stays closed until the next injection phase.

It has been found that the lubrication system for marine engines with the Alpha-type lubricator is not satisfactory after a relatively short time of functioning. As the entire system including the Alpha Lubricator is relatively expensive and long-term reliability is generally requested, it would be desirable to extend proper functioning over a longer time span.

Ball valves are in general mentioned in US3387625, US2005/217730 and WO2015192808. The Korean patent application KR20160124961 by Jinhap Ind Co Ltd discloses a method of deformation of a check valve by pressing a steel ball into the valve seat. The check valve has a special structure of a two regions that have different bending radii. This special structure results is believed to result in the check valve getting leaks with time. In order to provide an improvement, the circular edge between the two regions is deformed by pressing a ball into the valve seat so that a smooth gradual transition is created instead of a sharp line between the two regions.

Such type of valve seat as in KR20160124961, however, is not found in the Alpha-type lubricator and a deformation of a transition line between two curved regions with different bending radii does not appear to apply for the problem that has been experienced with the Alpha-type lubricator.

Moreover US 3589386 A, WO 2015/192808 A1 and DE 10 2013 210760 A1 disclose valve seats that are made by plastic deformation. These documents disclose manufacture of valve seats where only the seating part has to be supported when deforming the valve seat.

None of these documents mention that the plastic deformation is used for modifying a valve seat which is an internal part in an injector and where the high deformation forces might deform internal parts of such lubricator.

### DESCRIPTION / SUMMARY OF THE INVENTION

It is an objective of the invention to provide an improvement in the art. A particular objective is to provide a method for improving a lubrication system with a lubricator of the type as described above, especially an Alpha lubrication system with an Alpha Lubricator.

The objective is obtained with a method mentioned by way of introduction and which is peculiar in that the method comprises removing the spring and valve member from the valve chamber and modifying the valve-seat in the valve-chamber by forcing a deformation member into the valve-seat and causing plastic deformation of the valve-seat for improving dimensional precision of the valve seat by the deformation member; re-fitting the valve member and the spring after modification of the valve-seat; subsequently operating the lubricator for the lubrication system of the engine with the modified valve-seat.

Different embodiments occur from the description and the independent claims.

The term "lubricator" is used herein for a lubricator pump unit that pressurizes and doses the lubricant for the lubricant injectors in the corresponding large slow-running two-stroke engine, typically fuelled with diesel or gas fuel. The lubricator and its function are explained in detail below with reference to the Alpha Lubricator as an example, which was described above with reference to FIG. 1.

The term "injection phase" is used for the time during which lubricant is injected into the cylinder by an injector. The term "idle phase" is used for the time between injection phases. The term "injection-cycle" is used for the time it takes to start an injection sequence and until the next injection sequence starts, an injection sequence typically involving all lubricant injectors in each injection sequence. For example, the injection sequence comprises a single injection by each injector, in which case the injection-cycle is measured from the start of the injection phase to the start of the next injection phase. The term "timing" of the injection is used for the adjustment of the start of the injection phase by the injector relatively to a specific position of the piston inside the cylinder.

For intervals stated as between a first value and a second value, the end points are optionally included.

Surface roughness is expressed as the arithmetic average roughness value Ra.

Thorough study of the problem with the relatively short lifetime of the Alpha lubrication system has revealed that the reduced performance is due to leakage from the non-return valve in the Alpha Lubricator. This is surprising, as it is not a component that is generally believed to face degradation problems after relatively short function. In studies, it has been found that the on-return valve leaked already after 1 million cycles. Although, 1 million cycles may appear as a large number at first sight, this is not so in practice, as it may correspond to less than the time lapse between subsequent maintenance stops of the engine.

Especially, if the Alpha Lubricator is used for lubricant injection at elevated pressure, the problem is more pronounced

The recognition that the problem was due to leakage in the non-return valve of the Alpha Lubricator was a very useful finding in that the functioning of the entire lubrication system had the potential for improvement by modifying only a relatively small component, namely the non-return valve of the used lubricator.

From the recognition of the problem of the leakage, a technical solution was not straightforward. Especially, a mere exchange of the lubricator would not only be an expensive solution but also limit the functioning to only a further 1 million lubricant injection cycles. It was therefore an additional objective to provide an upgrade to the Alpha Lubricator.

This objective was achieved by modifying the valve-seat in the valve chamber by forcing, for example pressing or hammering, a deformation-member into the valve seat at a force causing plastic deformation thereof. The deformation member has a cross section that is larger than the lateral extension of the valve seat and is pressed onto the valve seat with sufficient force or hammered into the valve seat with sufficient force and speed to cause the plastic deformation. The exact force and optional speed necessary to cause such deformation depends on the size and type of metal of the valve seat. The term "sufficient force" implies that a deformation is achieved in that metal is moved on the surface of the valve seat due to the pressure and impact on its surface.

It is advantageous to provide a deformation member with lower surface roughness than the original valve seat. In experiments, it has been seen by microscopic investigation that the impression of such deformation member onto the valve seat, if done with sufficient force, substantially reduces the surface roughness of the valve seat.

This reduction of surface roughness has surprisingly turned out not only to provide a closer and tighter contact between the valve member and the valve seat but also to result in a many-fold increase of the lifetime of the non-return valve, and thus increases the lifetime of the lubricator and improves the entire lubrication system. For example, it is advantageous to reduce the surface roughness by this method to less than 12.5µm, optionally less than 6.3µm or less than 1.6µm. Optionally, the surface roughness is in the range of 12.5 to 0.8µm, 16.3 to 0.8µm, or 1.6 to 0.8µm.

The impression of the deformation tool modifies the shape of the valve seat. The final shape of the valve seat depends on the shape of the deformation tool, the deformation member of which is formed as a mirror template to the deformed valve seat.

Typically, the deformation member is convex and creates a concave surface of the valve seat. A useful deformation member has a spherical surface and creates a spherical impression in the valve seat such that the valve seat follows a part of a sphere.

However, using a conical deformation member is also possible, and the method will form a conical seat when pressed or hammered with sufficient force into the valve seat.

As a further option, the deformation member is concave and creates a convex shape of the valve seat. An example is a convex valve seat that is shaped as a circular-symmetric torus, for example with an elliptical or circular cross section. If also the valve member is convex, for example spherical, the valve member and the toroidal valve seat have a mutual ring of contact which is very narrow due to the tangential contact. A narrow ring of contact is also obtained between such torus and a conical valve member.

After modification, a valve member is loaded into the valve chamber for tightening against the valve seat along a circular ring after modification of the valve seat.

For example, the method comprises modifying to the valve seat to attain a concave shape with a first radius of curvature, wherein the first radius of curvature is measured in a plane that is orthogonal to the valve seat. The term "orthogonal to the valve seat" is to be understood as orthogonal to the plane containing the ring of contact between the valve seat and the valve member.

Optionally, the deformation member has a first radius of curvature that is not less than a second radius of curvature of a convex valve member, typically ball member, which is closing the valve by being pre-stressed against the valve seat.

For example, the valve member is the same as the one that was inside the valve chamber prior to modification. Alternatively, a new valve member is loaded, for example having a different size and or shape. A typical valve member is of spherical shape so that the valve is a non-return ball valve.

Typically, the valve member is made of metal, for example steel. Alternatively, the valve member is made of polymer or ceramics.

In some embodiments, the radius of curvature for the valve seat is the same or approximately the same as the valve member. In other embodiments, the radius of curvature for the valve seat is larger, for example within 5-50% larger, than the radius of curvature of the valve member, for example ball member. In this case, the curvature of the valve seat is sufficient to guide the curved valve member to rest centrally on the valve seat. However, due the different curvatures, the ring of contact between the convex surface of the valve member and the concave surface of the valve seat is relatively thin, which is an advantage for good tightness and quick response of the non-return valve.

For example, the thickness of the ring-formed contact surface between the valve member and the valve seat is in the range of 0.01 to 0.5 mm, optionally in the range of 0.05 and 0.5 mm or in the range of 0.1 mm to 0.5 mm, if the valve seat has a diameter of 3 to 10 mm. In terms of an angular span in the polar angle, this corresponds roughly to 0.1 to 10 degrees. In some practical embodiments, a useful polar contact angle is in the range of 0.1 to 5 degrees. For example, the contact surface between the valve member and the valve seat has an area in the range of 0.1 mm2 to 2 mm2.

Typically, the valve member is 30-100% larger than the inner diameter of the valve seat. For example, of the inner diameter of the valve seat is 3 mm, the ball member is in the range of 4-6 mm in diameter. For example, the inner diameter of the valve seat is approximately equal to the diameter of the conduit which is upstream of the valve seat and closed by the non-return valve.

In the case of the radius of curvature of the modified concave valve seat being larger that the radius of curvature of the convex valve member, there is no requirement for precision of the radius of curvatures between the valve seat and the valve member. This makes the modification process relatively simple.

The lack of constraint of the valve seat and the valve member having the same radius of curvature also allows other concave shapes for the valve seat, for example ellipsoidal, parabolic, or hyperbolic. It is even possible to use a conical shape.

For the long lifetime, however, it is advantageous that the valve seat is circular symmetric. For example, the circular symmetry varies by less than 0.2 mm, for example less than 0.1 mm, when measured across the valve seat.

In some embodiments, the valve-seat in the valve-chamber is modified from a non-spherical shape into a shape that is part-spherical. The part-spherical valve-seat resembles the surface of a spherical segment, also called a spherical frustum. In the following, a valve-seat with such shape is called a part-spherical valve-seat.

In some practical embodiments, the modification of the lubricator comprises modifying the valve-seat into the part-spherical shape by forcing, for example pressing or hammering, a deformation-member with a spherical, hemispherical, or part-spherical surface into the valve-seat at a force that causes plastic deformation of the valve-seat from a non-spherical shape into a part-spherical shape.

Optionally, the modified valve-seat in the valve-chamber has a shape that is part-spherical with a bending radius equal to or substantially equal to but not smaller than a bending radius of the valve-member that is abutting the valve-seat. Alternatively, as already mentioned above, the radius of curvature of the valve seat after deformation is larger than the radius of curvature of the valve member that is inserted after deformation.

Optionally, in order to improve the system further, a further non-return valve is added to the existing non-return valve such that a double valve system is provided. A double valve system improves the tightness and longevity of the system. For example, a further non-return valve is added in series to the modified non-return valve. Such additional non-return valve is potentially attached to the lubricator housing at the lubricant exit.

The modified Alpha-type lubricator turned out to have a much longer lifetime in that no leak was detected even after 2 million injection cycles. The final technical solution was a simple modification of the existing Alpha Lubricator at relatively low cost, nevertheless solving the short-life problem of the entire Alpha lubrication system. Even in still properly functioning systems, or in new Alpha Lubricators, a modification according to the above can be made to obtain an improved valve seat.

For example, the method comprises operating the lubricator in the lubrication system for at least 100,000 lubrication injection cycles prior to the modification, and operating the lubrication system with the lubricator and the modified non-return valve after the modification.

However, the modification is potentially made before a new lubricator, such as the above mentioned Alpha lubricator, starts its operation.

In more detail, a concrete embodiment of the lubrication system is explained in the following.

The lubrication system provides lubricant to injectors for lubricating the cylinder or cylinders in a large slow-running two-stroke engine engine, for example a marine engine or a large engine in power plants. Typically, the engine is burning diesel or gas fuel. The engine comprises one or more cylinders, each with a reciprocal piston inside and with a plurality of lubricant injectors distributed along a perimeter of the cylinder for injection of lubricant into the cylinder at various positions on the perimeter during injection phases.

The lubrication system comprises a lubricator that is pipe-connected to each injector by a lubricant feed conduit, for example one feed conduit for each injector, for providing pressurized lubricant to each injector though the lubricant feed conduit during the injection phases.

The lubricator is of the type that comprises a housing, typically metal housing, in which a hydraulic-driven actuator piston is arranged reciprocal with a stroke length along a stroke direction. Optionally, the lubricator further comprises a stroke length adjustment mechanism configured for variably adjusting the stroke length of the reciprocal hydraulic-driven actuator piston between a minimum stroke length and a maximum stroke length.

The lubricator further comprises a plurality of injection plungers slidingly arranged in corresponding dosing channels, wherein the injection plungers are coupled to the actuator piston in order to be moved by the actuator piston and for pressurizing lubricant in the dosing channels during this movement. When the actuator piston is moved over the stroke length, the injector plungers are moved over a corresponding length. The movement the injection plungers inside the dosing channel pressurizes the lubricant in the dosing channel while the injection plungers move over a dosing channel distance, where the dosing channel distance defines the volume of lubricant in a pumping action expelled from the dosing channel during the injection phase through a non-return valve and through the feed conduit to the injector for injection of the lubricant into the engine cylinder.

For example, the dosing channel distance is equal to or less than the stroke length. This depends on the configuration. Optionally, the dosing channel distance is adjustable between a minimum dosing channel distance and a maximum dosing channel distance corresponding to the actuator piston's variable stroke length between the minimum stroke length and the maximum stroke length.

The lubricator also comprises a valve, typically electrical valve, arranged for causing switch between hydraulic pressure levels that are acting on the actuator piston in order to hydraulically drive the actuator piston reciprocally by the switching pressure levels. Typically, the actuator piston is pre-stressed against the rear end stop by a helical spring.

In some concrete embodiments, the lubricator receives high pressure oil for driving the actuator piston, and the valve switches between
a) access of the pressurized oil to the actuator piston in the injection phase and
b) connection between the actuator piston and a drain for drainage of oil from the actuator piston between injection phases.

The lubrication system further comprises a controller that controls the switching of the valve. In the case of an electrical valve, the controller is electrically connected to the electrical valve for controlling the timing of the switching for the injection phases by corresponding electrical signals transmitted from the controller to the electrical valve. Alternatively, the controller operates a high pressure valve upstream of the lubricator in order to provide switching of the high pressure oil for driving the actuator piston.

According to the above objective, the lubrication system is improved by modifying the non-return valve of the lubricator such that the valve-seat, typically metal valve seat, in the valve-chamber is improved, typically after a certain time of operation, but possibly also prior to start of operation while the lubricator is still new. The final technical solution turned out to be a simple modification of existing lubricators at relatively low cost, nevertheless solving the short-life problem of lubrication systems.

For clarification, it is pointed out that the term "injector" is used for an injection valve system comprising an injector housing having a lubricant inlet port, flow-connected to the lubricant feed conduit for receiving lubricant from it for injection into the cylinder. The injector further comprises one single injection nozzle with a nozzle aperture as a lubricant outlet that extends into the cylinder for injecting lubricant from the inlet port into the cylinder in the injection phase. Although, the injector has a single nozzle that extends into the cylinder through the cylinder wall, when the injector is properly mounted, the nozzle itself, optionally, has more than a single aperture. For example, nozzles with multiple apertures are disclosed in WO2012/126480.

For example, each of the injectors comprises an outlet-valve system at the nozzle configured for opening for flow of lubricant to the nozzle aperture during an injection phase upon pressure rise above a predetermined limit at the outlet-valve system and for closing the outlet-valve system after the injection phase. The outlet-valve system closes off for back-pressure from the cylinder and also prevents lubricant to enter the cylinder unless the outlet-valve is open. For example, the outlet-valve system comprises an outlet non-return valve. In the outlet non-return valve, the outlet-valve-member, for example a ball, ellipsoid, plate, or cylinder, is pre-stressed against an outlet-valve-seat by an outlet-valve spring. Upon provision of pressurised lubricant in a flow chamber upstream of the outlet-valve system, the pre-stressed force of the spring is counteracted by the lubricant pressure, and if the pressure is higher than the spring force, the outlet-valve-member is displaced from its outlet-valve-seat, and the outlet non-return valve opens for injection of lubricant through the nozzle aperture into the cylinder. For example, the outlet-valve spring acts on the valve-member in a direction away from the nozzle aperture, although, an opposite movement is also possible.

For example, the central controller comprises a computer or is connected by an electronic wired or wireless connection to a computer, where the computer is of the type that is configured for monitoring parameters for the actual state and motion of the engine, such that the amount and timing of the lubricant injection is controlled on the basis of the parameters.

Optionally, the injectors are SIP injectors configured to provide a mist of lubricant into the scavenging air of the cylinders. A spray of atomized droplets, also called mist of oil, is important in SIP lubrication, where the sprays of lubricant are repeatedly injected by the injectors into the scavenging air inside the cylinder prior to the piston passing the injectors in its movement towards the TDC. In the scavenging air, the atomized droplets are diffused and distributed onto the cylinder wall, as they are transported in a direction towards the TDC due to a swirling motion of the scavenging air towards the TDC.

Examples of such injectors for SIP injection are disclosed in WO2012/126473 and WO2014/048438. Additional options for SIP injectors with electrical valves are found in Danish patent applications DK2017 70936 and DK2017 70940. For example, the injectors comprise a nozzle with a nozzle aperture of between 0.1 and 1 mm, for example between 0.2 and 0.5mm, and are configured for ejecting a spray of atomized droplets, which is also called a mist of oil. The atomization of the spray is due to highly pressurized lubricant in the lubricant injector at the nozzle. The pressure from the lubricator is higher than 10 bar, typically between 20 bar and 120 bar for this high pressure injection. An example is an interval of between 30 and 100 bar. Another example is an interval of between 60 and 120 bar, for example between 60 and 100 bar. The injection time is short, typically in the order of 5-30 milliseconds (msec). However, the injection time can be adjusted to 1 msec or even less than 1 msec, for example down to 0.1 msec.

In the case of SIP injection, the lubricator is operated with the correspondingly necessary parameters, especially the pressure intervals. For example, the method comprises operating the lubrication system with the modified lubricator at a lubricant pressure in the range of 20-100 bar in combination with SIP injectors, injection a mist of atomized droplets of lubricant by the SIP injectors into swirling scavenging air inside the engine cylinder and distributing the droplets onto the cylinder wall during transport of the droplets by swirling motion towards the top dead centre, TDC, of the cylinder.

Also, the viscosity influences the atomization. Lubricants used in marine engines, typically, have a typical kinematic viscosity of about 220 cSt at 40°C and 20 cSt at 100°C, which translates into a dynamic viscosity of between 202 and 37 mPa·s. An example of a useful lubricant is the high performance, marine diesel engine cylinder oil ExxonMobil^{®} Mobilgard^{™} 560VS. Other lubricants useful for marine engines are other Mobilgard^{™} oils as well as Castrol^{®} Cyltech oils. Commonly used lubricants for marine engines have largely identical viscosity profiles in the range of 40-100°C and are all useful for atomization, for example when having a nozzle aperture diameter of 0.1-0.8 mm, and the lubricant has a pressure of 30-80 bar at the aperture and a temperature in the region of 30-100°C or 40-100°C. See also, the published article on this subject by Rathesan Ravendran, Peter Jensen, Jesper de Claville Christiansen, Benny Endelt, Erik Appel Jensen, (2017) "Rheological behaviour of lubrication oils used in two-stroke marine engines", Industrial Lubrication and Tribology, Vol. 69 Issue: 5, pp.750-753, https://doi.org/10.1108/ILT-03-2016-0075.

### SHORT DESCRIPTION OF THE DRAWINGS

The invention will be explained in more detail with reference to the drawing, where
- FIG. 1: is a reproduction of a drawing of an Alpha controller s published on the Internet site http://www.mariness.co.kr/02_business/Doosan%20Retrofit%20Service.pdf?PHPSESSID=fd56da9de6eaca2f1f446512e84fcf69
- FIG. 2: is a sketch of part of a cylinder in an engine with a lubrication system;
- FIG. 3: illustrates an example of a lubricator for modification;
- FIG. 4: illustrates an example of a lubricator prior to modification;
- FIG. 5: show microscope images of a valve seat of an Alpha Lubricator, in which a) a new valve contains metal fringes, b) a new valve seat has edges, and c) a used valve seat shows uneven wear;
- FIG. 6: shows measurements of performance of a lubricator before modification after a) 3850 injection cycles and b) 1 million cycles;
- FIG. 7: shows measurements of performance of a modified lubricator after2 million injection cycles;
- FIG. 8: illustrates an example of a lubricator after modification;
- FIG. 9: shows a microscope image of a deformed valve seat;
- FIG. 10: illustrates examples of tools with deformation members that are a) spherical, b) ellipsoidal, and c) conical.

### DETAILED DESCRIPTION / PREFERRED EMBODIMENT

FIG. 1 is a reproduction of a drawing of an Alpha controller s published on the Internet site http://www.mariness.co.kr/02_business/Doosan%20Retrofit%20Service.pdf?PHPSESSID=fd56da9de6eaca2f1f446512e84fcf69.

For the method as described herein, this drawing of the Alpha Lubricator serves as example for a concrete embodiment of a lubricator that is modified. Accordingly, the explanation as given in the introduction applies for the explanation of the modification equally well.

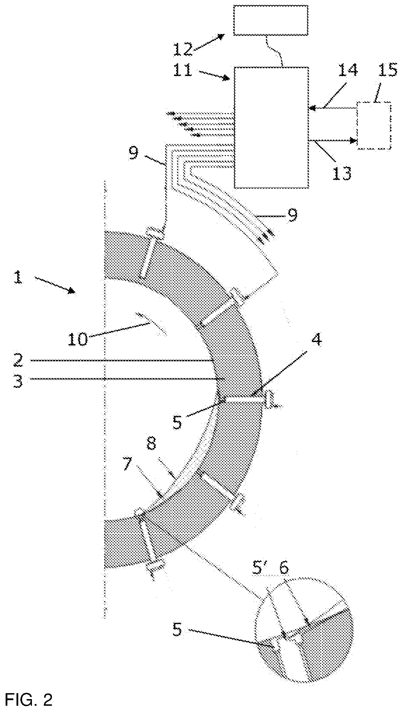

FIG. 2 illustrates one half of a cylinder of a large slow-running two-stroke engine, for example marine diesel engine. The cylinder 1 comprises a cylinder liner 2 on the inner side of the cylinder wall 3. Inside the cylinder wall 3, there are provided a plurality of injectors 4 for injection of lubricant into the cylinder 1.

As illustrated, the injectors 4 are distributed along a circle with the same angular distance between adjacent injectors 4, although this is not strictly necessary. Also, the arrangement along a circle is not necessary, seeing that an arrangement with axially shifted injectors is also possible, for example every second injector shifted towards the piston's top dead centre (TDC) relatively to a neighbouring injector.

As illustrated, the injectors 4 receive pressurised lubrication oil from a lubricator 11 through lubrication supply lines 9. The supplied oil is typically heated to a specific temperature, for example 50-60 degrees. The lubricator 11 supplies pressurised lubrication oil to the injectors 4 in precisely timed pulses, synchronised with the piston motion in the cylinder 1 of the engine. The injection by the lubricator 11 is controlled by a controller 12. For the synchronisation, the controller 12 monitors parameters for the actual state and motion of the engine, including speed, load, and position of the crankshaft, as the latter reveals the position of the pistons in the cylinders.

Each of the injectors 4 has a nozzle 5 with a nozzle aperture 5' from which lubricant is ejected under high pressure into the cylinder 1, for example in the form of a compact jet or as a fine atomized spray 8 with miniature droplets 7 for SIP injection.

For example for SIP injection, the nozzle aperture has a diameter of between 0.1 and 0.8 mm, such as between 0.2 and 0.5 mm, which at high pressure atomizes the lubricant into a fine spray 8, which is in contrast to a compact jet of lubricant. Pressures are above 10 bar, for example in the range 10-120 bar, optionally 20 to 120 bar or 20 to 100 bar, 30 to 80 bar, or 50 to 80 bar, or 60 to 120 bar, or even at higher pressure than 120 bar, The swirl 10 of the scavenging air in the cylinder 1 transports and presses the spray 8 against the cylinder liner 2 such that an even distribution of lubrication oil on the cylinder liner 2 is achieved.

Optionally, the cylinder liner 2 is provided with free outs 6 for providing adequate space for the spray 8 or jet from the injector 4.

The lubricator 11 is connected to a supply conduit 14 for receiving lubricant from a lubricant supply 15, including an oil pump, and a return conduit 13 for return of lubricant, typically to an oil reservoir, optionally for recirculation of lubricant. The lubricant pressure in the supply conduit 14 is higher than the pressure in the return conduit 13, for example at least two times higher. The lubricant supply conduit 14 is also used for supplying lubricant for lubrication in addition to driving the actuator piston in the lubricator 11.

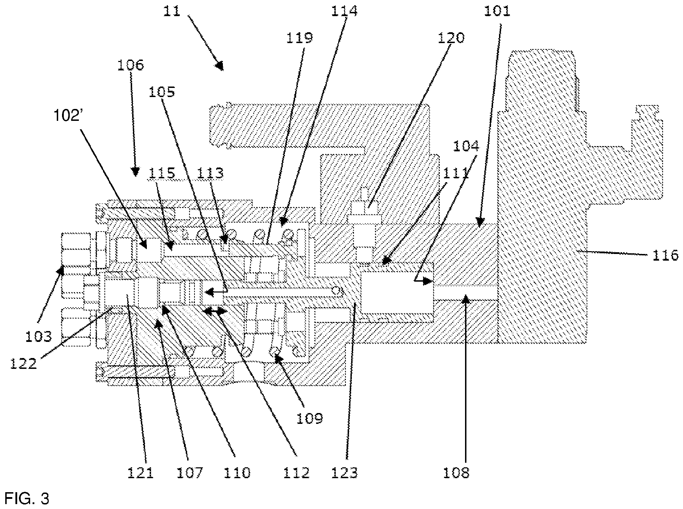

FIG. 3 illustrates an example of a lubricator 11 for modification. The numbering is equal to the modified prior art lubricator of FIG. 1. Prior to modification, the valve-chamber 102' contains the single non-return valve 102 of FIG. 1.

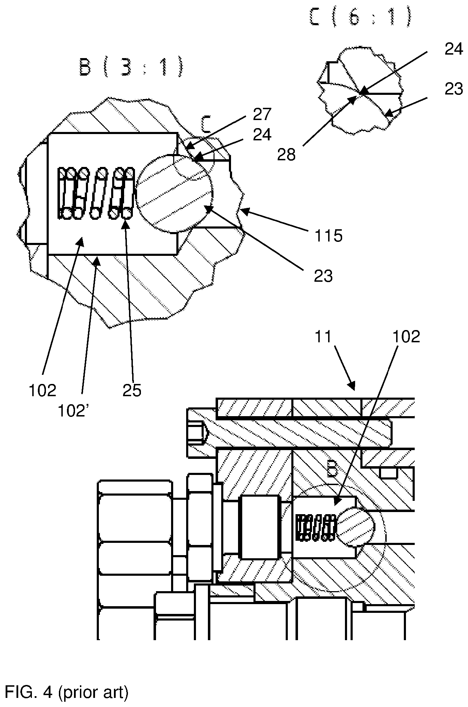

FIG. 4 is a more detailed drawing of the non-return valve 102 in the valve-chamber 102' of prior art lubricator 11 of FIG. 1. Two enlarged portions B and C illustrate details in further magnification of 3 and 6, respectively. The non-return valve 102 comprises a spherical valve-member 23, pre-stressed against a valve-seat 24 by the load from a helical spring 25. The lubricant in the dosing channel 115 displaces the valve-member 23 against the pre-stressing force of the spring 25, once the lubricant in the dosing channel 115 achieved a pressure above a predetermined limit. As illustrated, the valve-seat 24 is a sharp edge, despite the valve-chamber 102' generally having a conical end-portion 27. Thorough study of the early mal-functioning of the lubricator 11 has revealed that leaks are due to tightness problems of the sharp edged valve-seat 24.

An improvement is achieved, if the valve-seat 24 is modified. For example, the valve-seat after modification has a profile that is part of a sphere, optionally having the same radius as the spherical valve-member.

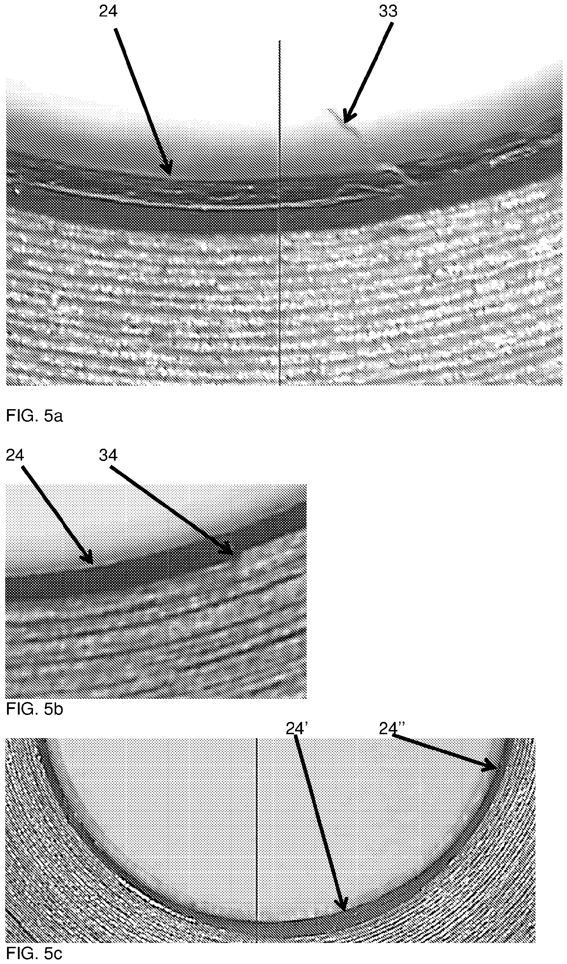

FIG. 5 shows some microscope images of a valve seat of an Alpha Lubricator prior to modification. FIG. 5a shows pronounced roughness of the valve seat as well as metal fringes 35 in in the valve seat of a new Alpha Lubricator, which is detrimental to tightness of the non-return valve. FIG. 5b shows edges 34 in the valve seat 24 of a new Alpha Lubricator, which prevents a proper sealing between the valve seat 24 and the ball member. FIG. 5c show a micrograph of a used Alpha Lubricator, illustrating sections 24' of the valve seat appearing broader than other sections 24", which is due to elliptical shape of the valve seat. An elliptical valve seat is probably due to uneven wear during use. It does not seal properly any more against a spherical valve member. All these defects in the valve seat, some stemming from a new Alpha Lubricator, others from wear during use, prevent a satisfactory sealing, especially at elevated lubricant pressure.

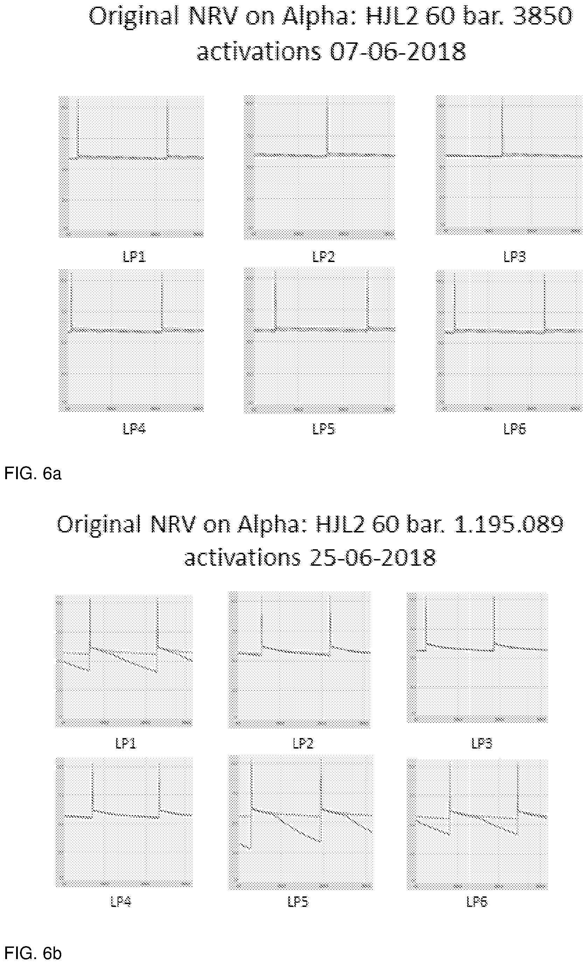

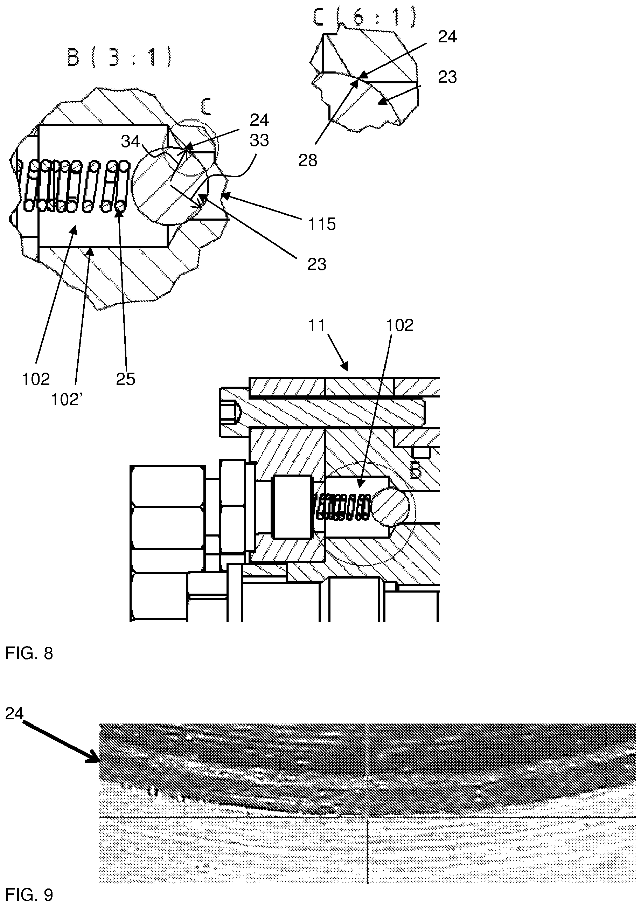

FIG. 6a and 6b show measurements of performance of a lubricator before modification, where the valve-seat 24 was sharp-edged as illustrated in FIG. 4 and defects as in FIGF. 5. The six graphs in FIG. 6a and FIG. 6b are made for the six outlets of the Alpha Lubricator, each outlet having one non-return valve. The measurements in FIG. 8a were made after 3850 injection cycles. The peaks show injections and the horizontal level shows the pressure level in the idle phase. The graphs in FIG. 8b show similar measurements after 1 million cycles. The drop of the solid drawn curves illustrates pressure loss in the idle phase, which is due to leaking non-return valves 102.

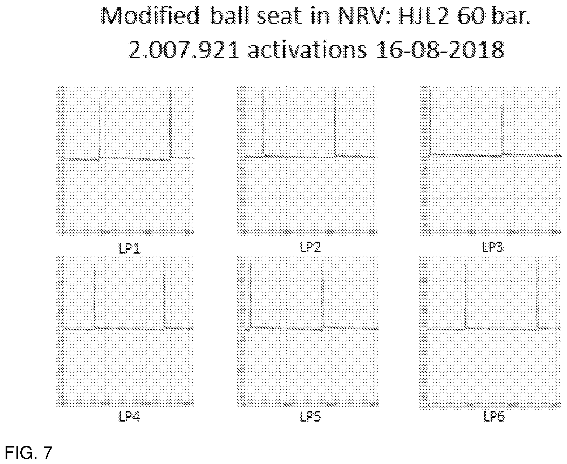

FIG. 7 shows measurements of performance of a modified lubricator after 2 million injection cycles. The experimental results show horizontal pressure curves in the idle phases between the spikes of the injection phases. The horizontal pressure levels of FIG. 7, in contrast to the decreasing pressure curves of FIG 6b, express increased lifetime by more than a factor of 2 of the modified non-return valve 102 with respect to tightness.

The lubricator 11 in the test experiments of FIG. 7 had a valve-seat 24 that was modified to a part-spherical configuration with smaller surface roughness and higher precision with respect to circular symmetry.

The modification of the valve seat for the experiments of FIG. 7 has been made by pressing a deformation-member in the shape of a ball of approximately the same size as the ball-shaped valve-member 23 onto the sharp-edged valve-seat 24 with a force corresponding to 200 kg. This force was sufficient to deform the sharp-edged valve-seat 24 from the configuration of FIG. 4 into a shape of a part of a sphere with less surface roughness and more precise circular symmetry.

Deformation by pressing or hammering a deformation member into the valve-chamber, for example a steel ball loaded with a force, is a simple way of modifying the sharp-edged valve-seat 24 of FIG. 4.

FIG. 8 illustrates an example in which the valve-seat 24 has been modified by deformation into concave segment, for example part-spherical segment, such as used for the test experiments of FIG. 7. It shows a ball-shaped valve-member 23 resting against the valve seat 24.

FIG. 9 shows a microscope image of a modified valve seat in which a deformation member has been used to deform the valve seat. In the experiment, a spherical deformation member with a surface roughness of 0.06 µm (arithmetic average roughness value Ra) was pressed into the valve seat with a force corresponding to 200 kg, caused deformation, and resulted in a changed surface roughness of 0.8 µm. The width of the ring-shaped valve seat was 0.06 mm. The surface area of the valve seat was in the order of 0.5 mm2.

For example, the final valve seat has a concave shape, typically part-spherical shape, for example having the same radius of curvature or substantially same radius as the spherical valve-member. Due to this part-spherical valve-seat, the contact area 28 between the spherical valve-member 23 and the valve set 24 is smoother than between the spherical valve-member 23 and the sharp-edged valve-seat 24 in FIG. 4. Alternatively, the valve seat attains a concave form with a radius of curvature that is larger than for the valve member. As a further alternative, the final valve seat has a conical shape or a convex toroidal shape.

As illustrated in FIG. 8 for further clarification, the radius of curvature 33 of the valve seat 24 and the radius of curvature 34 of the spherical valve-member are measured in a plane that is orthogonal and central to the valve seat. The two radii of curvature are illustrated in FIG. 8, which is a cross sectional view, and thus a view onto such plane.

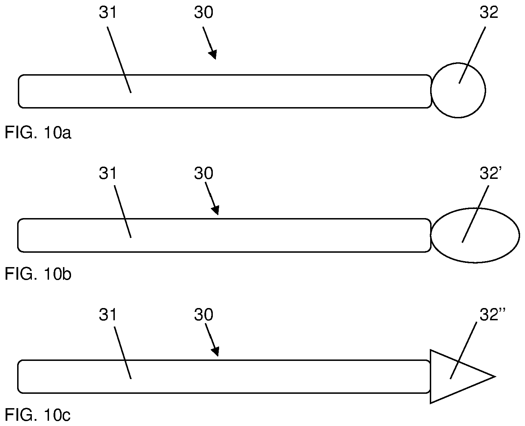

FIG. 10a illustrates a tool 30 with a stem 31 and a deformation member 32 at the end of the stem 31. The deformation member 32 has a spherical shape, which results in a spherical deformation of the valve seat if pressed or hammered into the valve seat 24. FIG. 10b illustrates an ellipsoidal deformation member 32', where the longitudinal axis of the ellipsoid is parallel to the stem and, thus, circular symmetric in a plane lateral thereto. FIG. 10c illustrates a conical deformation member 32". The spherical shape of the deformation member 32 has the advantage over the conical deformation member 32" in that the circular deformation of the valve seat is not so critically dependent on a precise parallel orientation of the stem 31 with the deformation member 32, 32" relatively to the central axis of the valve seat 24. Thus, for achieving a good result, the spherical deformation member 32 is easiest to operate.

## Claims

1. A method of improving a lubrication system of a large slow running engine,
wherein the engine comprises a cylinder (1) with a reciprocal piston inside and with a plurality of lubricant injectors (4) distributed along a perimeter of the cylinder (1) for injection of lubricant into the cylinder (1) at various positions on the perimeter during injection phases;
wherein the lubrication system is configured for providing lubricant to the injectors (4) in the injection phases; wherein the lubrication system comprises a lubricator (11) for being pipe-connected to each injector (4) by a lubricant feed conduit (9) for providing pressurized lubricant to each injector (4) though the lubricant feed conduit (9) in the injection phases;
wherein the lubricator (11) comprises a housing (101) in which a hydraulic-driven actuator piston (123) is arranged reciprocal along a stroke length,
wherein the housing (101) further contains a plurality of injection plungers (119) and a corresponding plurality of dosing channels (115) as well as non-return valves (102), one for each dosing channel (115), each injection plunger (119) being slidingly arranged in one of the dosing channels (115), wherein the injection plungers (119) are coupled to the actuator piston (123) in order to be moved in common by the actuator piston (123) over the stroke length and as a consequence pressurize lubricant in the dosing channels (115) over a dosing channel distance for expelling the pressurized lubricant from each dosing channels (115) through the corresponding non-return valve (102) for injection of the lubricant into the engine cylinder (1); wherein the dosing channel distance defines the volume of lubricant expelled from the dosing channel (115) through the non-return valve (102) during the injection phase;
wherein each non-return valve (102) is provided in a corresponding valve-chamber (102') in the housing (11) and comprises a valve-member (23) pre-stressed against a valve-seat (24) by the load of a spring (25);
**characterized in that** the method comprises removing the spring (25) and valve member (23) from the valve chamber (102') and modifying the valve-seat (24) in the valve-chamber (102') by forcing a deformation member (32, 32', 32") into the valve-seat (24) and causing plastic deformation of the valve-seat (24) for improving dimensional precision of the valve seat by the deformation member (32, 32', 32"); re-fitting the valve member and the spring after modification of the valve-seat; subsequently operating the lubricator (11) for the lubrication system of the engine with the modified valve-seat (24).

2. A method according to claim 1, wherein the modification comprises providing a circular symmetric deformation member (32, 32', 32") and deforming the valve-seat into a circular symmetric shape by forcing the deformation member (32, 32', 32") into the valve-seat (24).

3. A method according to claim 2, wherein the circular symmetry varies by less than 0.2 mm when measured across the valve seat (24).

4. A method according to any preceding claim, wherein method comprises providing a deformation member (32, 32', 32") with a surface roughness smaller than the surface roughness of the valve seat (24); and wherein the deformation comprises forcing the deformation member (32, 32', 32") into the valve-seat (24) at a force that causes reduction of surface roughness of the valve-seat (24) for tight contact between the valve member (23) and the valve set (24).

5. A method according to claim 4, wherein the method comprises reducing the surface roughness of the valve seat (24) to less than 12.5µm by the deformation with the deformation member (32, 32', 32").

6. A method according to claim 2 or 3, wherein the deformation member (32, 32', 32") is either A or B, wherein
A) the deformation member (32, 32') is convex with a first radius of curvature and the method comprises modifying to the valve-seat (24) to attain this first radius (34) of curvature, wherein the first radius of curvature (34) is measured in a plane orthogonal to the valve seat (24); wherein the method comprises loading a valve member (23) into the valve chamber (102') for tightening against the valve-seat (24) along a circular ring after modification of the valve-seat (24), wherein the valve member (23) is provided with a second radius of curvature (33) equal to or smaller than the first radius of curvature (34) when measured in a plane orthogonal to the valve seat (24);
B) the deformation member (32") is conical and the method comprises modifying to the valve-seat (24) to attain this conical shape.

7. A method according to claims 6, wherein the first radius of curvature is 5-50% larger than the second radius of curvature.

8. A method according to any preceding claim, wherein the modification comprises deformation of the valve-seat (23) into a part-spherical shape by forcing a spherical deformation member (32) into the valve-seat (23) at a force causing mechanical deformation of the valve-seat (23) from a non-spherical shape into a part-spherical shape.

9. A method according to any preceding claims, wherein the method comprises operating the lubricator (11) in the lubrication system for at least 100,000 lubrication injection cycles prior to the modification, and continuing operation of the lubrication system with the lubricator (11) and the modified valve-seat (24) after the modification.

10. A method according to any preceding claim, wherein the method comprises operating the lubrication system by feeding lubricant to the injectors with the modified lubricator (11) at a lubricant pressure in the range of 20-100 bar and injecting a mist of atomized droplets of lubricant by the injectors into swirling scavenging air inside the engine cylinder and distributing the droplets onto the cylinder wall during transport of the droplets by swirling motion towards the top dead centre, TDC, of the cylinder.

11. A method according to any preceding claim, wherein the method comprises operating the lubrication system with the lubricator (11) and the modified valve-seat (24) after the modification at a lubricant pressure in the range of 20-100 bar in combination with SIP injectors, injection a mist of atomized droplets of lubricant by the SIP injectors into swirling scavenging air inside the engine cylinder and distributing the droplets onto the cylinder wall during transport of the droplets by swirling motion towards the top dead centre, TDC, of the cylinder.

## Patentansprüche

1. Verfahren zur Verbesserung eines Schmiersystems eines großen langsam laufenden Motors,
wobei der Motor einen Zylinder (1) mit einem hin- und hergehenden Kolben im Inneren und mit einer Vielzahl von Schmiermitteleinspritzvorrichtungen (4) umfasst, die zur Einspritzung von Schmiermittel in den Zylinder (1) an verschiedenen Positionen an dem Umfang während Einspritzphasen entlang eines Umfangs des Zylinders (1) verteilt sind;
wobei das Schmiersystem konfiguriert ist, um den Einspritzvorrichtungen (4) in den Einspritzphasen Schmiermittel bereitzustellen; wobei das Schmiersystem eine Schmiervorrichtung (11) umfasst, um mit jeder Einspritzvorrichtung (4) durch eine Schmiermittelzufuhrleitung (9) rohrverbunden zu sein, um jeder Einspritzvorrichtung (4) durch die Schmiermittelzufuhrleitung (9) in den Einspritzphasen unter Druck stehendes Schmiermittel bereitzustellen;
wobei die Schmiervorrichtung (11) ein Gehäuse (101) umfasst, in dem ein hydraulisch angetriebener Betätigungskolben (123) hin- und hergehend entlang einer Hublänge angeordnet ist,
wobei das Gehäuse (101) ferner eine Vielzahl von Einspritzkolben (119) und eine entsprechende Vielzahl von Dosierkanälen (115) sowie Rückschlagventile (102) umfasst, eines für jeden Dosierkanal (115), wobei jeder Einspritzkolben (119) verschiebbar in einem der Dosierkanäle (115) angeordnet ist, wobei die Einspritzkolben (119) an den Betätigungskolben (123) gekoppelt sind, um gemeinsam mit dem Betätigungskolben (123) über die Hublänge bewegt zu werden und als Folge Schmiermittel in den Dosierkanälen (115) über eine Dosierkanalstrecke unter Druck zu setzen, um das unter Druck gesetzte Schmiermittel aus jedem der Dosierkanäle (115) durch das entsprechende Rückschlagventil (102) zur Einspritzung des Schmiermittels in den Motorzylinder (1) auszustoßen; wobei die Dosierkanalstrecke das Volumen an Schmiermittel definiert, das aus dem Dosierkanal (115) durch das Rückschlagventil (102) während der Einspritzphase ausgestoßen wird;
wobei jedes Rückschlagventil (102) in einer entsprechenden Ventilkammer (102') in dem Gehäuse (11) bereitgestellt ist und ein Ventilelement (23) umfasst, das durch die Last einer Feder (25) gegen einen Ventilsitz (24) vorgespannt ist;
**dadurch gekennzeichnet, dass** das Verfahren das Entfernen der Feder (25) und des Ventilelements (23) aus der Ventilkammer (102') und das Modifizieren des Ventilsitzes (24) in der Ventilkammer (102') durch Zwingen eines Verformungselements (32, 32', 32") in den Ventilsitz (24) und Bewirken von plastischer Verformung des Ventilsitzes (24) zur Verbesserung von dimensionaler Präzision des Ventilsitzes durch das Verformungselement (32, 32', 32''); Wiedereinbauen des Ventilelements und der Feder nach Modifikation des Ventilsitzes; anschließend Betätigen der Schmiervorrichtung (11) für das Schmiersystem des Motors mit dem modifizierten Ventilsitz (24) umfasst.

2. Verfahren nach Anspruch 1, wobei die Modifikation das Bereitstellen eines kreissymmetrischen Verformungselements (32, 32', 32'') und das Verformen des Ventilsitzes in eine kreissymmetrische Form durch Zwingen des Verformungselements (32, 32', 32") in den Ventilsitz (24) umfasst.

3. Verfahren nach Anspruch 2, wobei die Kreissymmetrie um weniger als 0,2 mm variiert, wenn über den Ventilsitz (24) gemessen.

4. Verfahren nach einem vorhergehenden Anspruch, wobei das Verfahren das Bereitstellen eines Verformungselements (32, 32', 32") mit einer Oberflächenrauigkeit umfasst, die kleiner als die Oberflächenrauigkeit des Ventilsitzes (24) ist; und wobei die Verformung das Zwingen des Verformungselements (32, 32', 32") in den Ventilsitz (24) mit einer Kraft umfasst, die Reduzierung der Oberflächenrauigkeit des Ventilsitzes (24) für engen Kontakt zwischen dem Ventilelement (23) und dem Ventilsatz (24) bewirkt.

5. Verfahren nach Anspruch 4, wobei das Verfahren das Reduzieren der Oberflächenrauigkeit des Ventilsitzes (24) auf weniger als 12,5 pm durch die Verformung mit dem Verformungselement (32, 32', 32'') umfasst.

6. Verfahren nach Anspruch 2 oder 3, wobei das Verformungselement (32, 32', 32'') entweder A oder B ist, wobei
A) das Verformungselement (32, 32') konvex mit einem ersten Krümmungsradius ist und das Verfahren das Modifizieren zu dem Ventilsitz (24) umfasst, um diesen ersten Krümmungsradius (34) zu erreichen, wobei der erste Krümmungsradius (34) in einer Ebene orthogonal zu dem Ventilsitz (24) gemessen wird; wobei das Verfahren das Laden eines Ventilelements (23) in die Ventilkammer (102') zum Festziehen gegen den Ventilsitz (24) entlang eines kreisförmigen Rings nach Modifikation des Ventilsitzes (24) umfasst, wobei das Ventilelement (23) mit einem zweiten Krümmungsradius (33) bereitgestellt ist, der gleich dem oder kleiner als der erste Krümmungsradius (34) ist, wenn in einer Ebene orthogonal zu dem Ventilsitz (24) gemessen;
B) das Verformungselement (32") konisch ist und das Verfahren das Modifizieren des Ventilsitzes (24) umfasst, um diese konische Form zu erreichen.

7. Verfahren nach Anspruch 6, wobei der erste Krümmungsradius 5-50 % größer als der zweite Krümmungsradius ist.

8. Verfahren nach einem vorhergehenden Anspruch, wobei die Modifikation Verformung des Ventilsitzes (23) in eine teilweise kugelförmige Form umfasst, indem ein kugelförmiges Verformungselement (32) bei einer Kraft in den Ventilsitz (23) gezwungen wird, die mechanische Verformung des Ventilsitzes (23) von einer nicht kugelförmigen Form in eine teilweise kugelförmige Form verursacht.

9. Verfahren nach einem der vorhergehenden Ansprüche, wobei das Verfahren das Betätigen der Schmiervorrichtung (11) in dem Schmiersystem für zumindest 100.000 Schmiereinspritzzyklen vor der Modifikation und das Fortsetzen der Betätigung des Schmiersystems mit der Schmiervorrichtung (11) und dem modifizierten Ventilsitz (24) nach der Modifikation umfasst.

10. Verfahren nach einem vorhergehenden Anspruch, wobei das Verfahren das Betätigen des Schmiersystems durch Zuführen von Schmiermittel zu den Einspritzvorrichtungen mit der modifizierten Schmiervorrichtung (11) bei einem Schmiermitteldruck in dem Bereich von 20-100 bar und das Einspritzen eines Nebels aus zerstäubten Schmiermitteltröpfchen durch die Einspritzvorrichtungen in wirbelnde Spülluft innerhalb des Motorzylinders und Verteilen der Tröpfchen auf der Zylinderwand während Transport der Tröpfchen durch Wirbelbewegung in Richtung des oberen Totpunkts, TDC, des Zylinders umfasst.

11. Verfahren nach einem vorhergehenden Anspruch, wobei das Verfahren das Betätigen des Schmiersystems mit der Schmiervorrichtung (11) und dem modifizierten Ventilsitz (24) nach der Modifikation bei einem Schmiermitteldruck in dem Bereich von 20-100 bar in Kombination mit SIP-Einspritzvorrichtungen, Einspritzen eines Nebels aus zerstäubten Schmiermitteltröpfchen durch die SIP-Einspritzvorrichtungen in wirbelnde Spülluft innerhalb des Motorzylinders und Verteilen der Tröpfchen auf der Zylinderwand während Transport der Tröpfchen durch Wirbelbewegung in Richtung des oberen Totpunkts, TDC, des Zylinders umfasst.

## Revendications

1. Procédé d'amélioration d'un système de lubrification d'un gros moteur à bas régime,
dans lequel le moteur comprend un cylindre (1) avec un piston alternatif à l'intérieur et avec une pluralité d'injecteurs de lubrifiant (4) répartis le long d'un périmètre du cylindre (1) pour l'injection de lubrifiant dans le cylindre (1) à diverses positions sur le périmètre pendant les phases d'injection ; dans lequel le système de lubrification est configuré pour fournir du lubrifiant aux injecteurs (4) dans les phases d'injection ; dans lequel le système de lubrification comprend un lubrificateur (11) devant être relié par tuyau à chaque injecteur (4) par un conduit d'alimentation en lubrifiant (9) pour fournir du lubrifiant sous pression à chaque injecteur (4) à travers le conduit d'alimentation en lubrifiant (9) dans les phases d'injection ;
dans lequel le lubrificateur (11) comprend un boîtier (101) dans lequel un piston actionneur (123) à entraînement hydraulique est disposé en va-et-vient le long d'une longueur de course,
dans lequel le boîtier (101) contient en outre une pluralité de plongeurs d'injection (119) et une pluralité correspondante de canaux de dosage (115) ainsi que des soupapes de retenue (102), l'une pour chaque canal de dosage (115), chaque plongeur d'injection (119) étant agencé de manière coulissante dans l'un des canaux de dosage (115), dans lequel les plongeurs d'injection (119) sont couplés au piston actionneur (123) afin d'être déplacés solidairement par le piston actionneur (123) sur la longueur de course et en conséquence mettre sous pression le lubrifiant dans les canaux de dosage (115) sur une distance de canal de dosage pour expulser le lubrifiant sous pression de chaque canal de dosage (115) à travers la soupape de retenue (102) correspondante pour l'injection du lubrifiant dans le cylindre de moteur (1) ; dans lequel la distance de canal de dosage définit le volume de lubrifiant expulsé du canal de dosage (115) à travers la soupape de retenue (102) pendant la phase d'injection ;
dans lequel chaque soupape de retenue (102) est prévue dans une chambre de soupape (102') correspondante dans le boîtier (11) et comprend un élément de soupape (23) précontraint contre un siège de soupape (24) par la charge d'un ressort (25) ;
**caractérisé en ce que** le procédé comprend le retrait du ressort (25) et de l'élément de soupape (23) de la chambre de soupape (102') et la modification du siège de soupape (24) dans la chambre de soupape (102') en forçant un élément de déformation (32, 32', 32") dans le siège de soupape (24) et provoquant une déformation plastique du siège de soupape (24) pour améliorer la précision dimensionnelle du siège de soupape par l'élément de déformation (32, 32' , 32") ; la remise en place de la soupape et du ressort après modification du siège de soupape ; l'actionnement ultérieur du lubrificateur (11) pour le système de lubrification du moteur avec le siège de soupape (24) modifié.

2. Procédé selon la revendication 1, dans lequel la modification comprend la fourniture d'un élément de déformation symétrique circulaire (32, 32', 32") et la déformation du siège de soupape en une forme symétrique circulaire en forçant l'élément de déformation (32, 32', 32") dans le siège de soupape (24).

3. Procédé selon la revendication 2, dans lequel la symétrie circulaire varie de moins de 0,2 mm lorsqu'elle est mesurée à travers le siège de soupape (24).

4. Procédé selon une quelconque revendication précédente, dans lequel le procédé comprend la fourniture d'un élément de déformation (32, 32', 32") avec une rugosité de surface inférieure à la rugosité de surface du siège de soupape (24) ; et dans lequel la déformation comprend le fait de forcer l'élément de déformation (32, 32', 32") dans le siège de soupape (24) à une force qui provoque une réduction de la rugosité de surface du siège de soupape (24) pour un contact étroit entre l'élément de soupape (23) et l'ensemble de soupapes (24).

5. Procédé selon la revendication 4, dans lequel le procédé comprend la réduction de la rugosité de surface du siège de soupape (24) à moins de 12,5 pm par la déformation avec l'élément de déformation (32, 32', 32").

6. Procédé selon la revendication 2 ou 3, dans lequel l'élément de déformation (32, 32', 32") est soit A ou B, dans lequel
A) l'élément de déformation (32, 32') est convexe avec un premier rayon de courbure et le procédé comprend la modification du siège de soupape (24) pour atteindre ce premier rayon (34) de courbure, dans lequel le premier rayon de courbure (34) est mesuré dans un plan orthogonal au siège de soupape (24) ; dans lequel le procédé comprend le chargement d'un élément de soupape (23) dans la chambre de soupape (102') pour le serrage contre le siège de soupape (24) le long d'un anneau circulaire après modification du siège de soupape (24), dans lequel l'élément de soupape (23) est pourvu d'un second rayon de courbure (33) inférieur ou égal au premier rayon de courbure (34) lorsqu'il est mesuré dans un plan orthogonal au siège de soupape (24) ;
B) l'élément de déformation (32") est conique et le procédé comprend la modification du siège de soupape (24) pour obtenir cette forme conique.

7. Procédé selon la revendication 6, dans lequel le premier rayon de courbure est de 5 à 50 % plus grand que le second rayon de courbure.

8. Procédé selon une quelconque revendication précédente, dans lequel la modification comprend la déformation du siège de soupape (23) en une forme partiellement sphérique en forçant un élément de déformation sphérique (32) dans le siège de soupape (23) à une force provoquant une déformation mécanique du siège de soupape (23) d'une forme non sphérique à une forme partiellement sphérique.

9. Procédé selon l'une quelconque des revendications précédentes, dans lequel le procédé comprend le fonctionnement du lubrificateur (11) dans le système de lubrification pendant au moins 100 000 cycles d'injection de lubrification avant la modification, et la poursuite du fonctionnement du système de lubrification avec le lubrificateur (11) et le siège de soupape (24) modifié après la modification.

10. Procédé selon une quelconque revendication précédente, dans lequel le procédé comprend le fonctionnement du système de lubrification en alimentant en lubrifiant les injecteurs avec le lubrificateur (11) modifié à une pression de lubrifiant dans la plage de 20 à 100 bars et en injectant un brouillard de gouttelettes atomisées de lubrifiant par les injecteurs en tourbillonnant l'air de balayage à l'intérieur du cylindre moteur et en distribuant les gouttelettes sur la paroi du cylindre lors du transport des gouttelettes par mouvement tourbillonnaire vers le point mort haut, PMH, du cylindre.

11. Procédé selon une quelconque revendication précédente, dans lequel le procédé comprend le fonctionnement du système de lubrification avec le lubrificateur (11) et le siège de soupape (24) modifié après la modification à une pression de lubrifiant dans la plage de 20 à 100 bars et en combinaison avec des injecteurs SIP, l'injection d'un brouillard de gouttelettes atomisées de lubrifiant par les injecteurs SIP en tourbillonnant l'air de balayage à l'intérieur du cylindre moteur et en distribuant les gouttelettes sur la paroi du cylindre lors du transport des gouttelettes par mouvement tourbillonnaire vers le point mort haut, PMH, du cylindre.
